# EUROPÄISCHE PATENTSCHRIFT

(11) **EP 2 373 128 B1**
(45) Veröffentlichungstag und Bekanntmachung des Hinweises auf die Patenterteilung: **24.04.2019**
(21) Anmeldenummer: 11401048.1
(22) Anmeldetag: 24.03.2011
(51) Int. Cl.: H05B 37/02, H05B 37/03, F21S 8/08, F21V 23/04, G01S 13/34, G01S 13/536, G01S 13/88, F21W 131/103

(54) **Verkehrsflächenbeleuchtungsvorrichtung**
Traffic surface lighting device
Dispositif d'éclairage de surfaces de voies de circulation

(30) Priorität: 30.03.2010 DE 202010000502 U
(43) Veröffentlichungstag der Anmeldung: 05.10.2011
(73) Patentinhaber: micas AG, 09376 Oelsnitz/Erzgebirge (DE); Siteco Beleuchtungstechnik GmbH, 83301 Traunreut (DE)
(72) Erfinder: Ebert, Mark, 09376 Oelsnitz (DE); Schneck, Jörg, 61381 Friedrichsdorf (DE)
(74) Vertreter: Steiniger, Carmen

(56) Entgegenhaltungen:
- EP-A2- 0 813 353
- EP-A2- 1 441 318
- WO-A1-2008/006817
- WO-A1-2011/040816
- WO-A1-2012/059842
- GB-A- 2 444 734
- GB-A- 2 453 369
- US-A1- 2009 267 525
- US-A1- 2010 001 652
- MARC-MICHAEL MEINECKE ET AL: "COMBINATION OF LFMCW AND FSK MODULATION PRINCIPLES FOR AUTOMOTIVE RADAR SYSTEMS Symposium Topic: Automotive Radar", GERMAN RADAR SYMPOSIUM GRS2000, BERLIN, 12. Oktober 2000 (2000-10-12), Seiten 1-5, XP055117937,

## Beschreibung

Die vorliegende Erfindung betrifft eine Verkehrsflächenbeleuchtungsvorrichtung aufweisend: mehrere, in einer Gruppe angeordnete Leuchten, insbesondere Straßenleuchten oder Scheinwerfer, wobei jede der mehreren Leuchten wenigstens ein Leuchtmittel aufweist, mit welchem ein situationsabhängiges Beleuchten einer Verkehrsfläche möglich ist, wobei in jeder der mehreren Leuchten eine Steuereinrichtung für das wenigstens eine Leuchtmittel integriert ist oder eine Steuereinrichtung für das wenigstens eine Leuchtmittel in dem wenigstens einen Leuchtmittel jeder der mehreren Leuchten integriert ist, und eine Kommunikationsverbindung, durch die die mehreren Leuchten miteinander verbunden sind.

Verkehrsflächenbeleuchtungsvorrichtungen der genannten Gattung sind Bestandteil der üblichen Infrastruktur in urbanen Gebieten. Sie werden in der Regel situationsunabhängig zu vordefinierten Tageszeiten betrieben. Beispielsweise werden Straßenbeleuchtungssysteme häufig bei Sonnenuntergang eingeschaltet und bei Sonnenaufgang wieder ausgeschaltet. Die Beleuchtung bei unbenutzter Straße ist jedoch nutzlos. Es wird Energie verschwendet und die unnatürliche nächtliche Beleuchtung kann auch als eine Art Umweltverschmutzung, die sogenannte Lichtverschmutzung, betrachtet werden.

Daher besteht ein Bedarf, unnütze Beleuchtung zu vermeiden. Hierzu sind Druckschriften bekannt, die sich mit der bedarfsgerechten Steuerung von Verkehrsflächenbeleuchtungsvorrichtungen befassen. So beschreibt beispielsweise die Druckschrift GB 2 444 734 A die Idee eines Straßenbeleuchtungssystems, das Objektanwesenheitssensoren umfasst, die miteinander kommunizieren und durch die Weiterleitung von Sensorsignalen zu entfernten Straßenleuchten ein rechtzeitiges Anschalten von Straßenleuchten ermöglichen soll. Das System beinhaltet Sensoren, die üblicherweise zur Verkehrsflusssteuerung eingesetzt werden. Aufgeführte Sensoren sind beispielsweise Infrarot-Anwesenheitssensoren, Radarbewegungsmelder, induktive Schleifen, Näherungssensoren und Kameras mit Bildbearbeitung. In dieser Druckschrift sind viele zum Teil kostenintensive Sensoren aufgeführt. Es ist aber nicht offenbart, welche der aufgeführten Komponenten geeignet sind, das angestrebte System zuverlässig und wirtschaftlich zu realisieren. Systeme, die entweder nicht zuverlässig funktionieren oder deren betriebswirtschaftliche Kosten höher sind als der erwirtschaftete Gewinn, haben jedoch keine Aussicht auf einen großflächigen Einsatz.

Die Druckschrift GB 2 453 369 A offenbart eine Radardetektionsvorrichtung zum Steuern von Verkehrsampeln. In dieser Vorrichtung ist zum Steuern einer an einem Mast angebrachten Verkehrsampel ein Detektor an der Spitze des Mastes vorgesehen. Zudem ist an dem Mast ein zusätzlicher Druckknopf angebracht, welcher es Passanten erlaubt, manuell das Ampellicht zu ändern und die Straße zu überqueren. Ein in dieser Druckschrift beschriebenes Radardetektionssubsystem umfasst einen Radardetektor, einen Prozessor, optional einen Speicher zum Speichern erfasster Daten, eine Lichtsteuerung sowie einen Druckknopf. Zum Detektieren innerhalb einer Detektionszone arbeitet der Detektor in Übereinstimmung mit einer frequenzmodulierten Dauerstrichradartechnik (FMCW) und einer Dopplereffektradartechnik. Die Detektorzone umfasst zwei überlappende Zonen, wobei eine dieser Zonen mittels einer FMCW-Radartechnik und die andere Zone durch eine Dopplereffektradartechnik gesteuert wird.

Die Druckschrift WO 2011/040816 A1 beschreibt ein Sicherheitssystem zum Überwachen eines Bereiches, welches eine Erkennungs- und Beleuchtungseinheit sowie eine Überwachungseinheit aufweist. Die Erkennungs- und Beleuchtungseinheit weist u. a. ein Radarsystem zum Erfassen eines eingedrungenen Objektes, eine Beleuchtungsvorrichtung zum Anstrahlen des Objektes mit einem beweglichen Lichtstrahl, einen Aktor zum Verstellen des Lichtstrahls sowie eine Steuereinrichtung zum Aktivieren der Beleuchtungsvorrichtung und zum Steuern des Aktors auf. Das Radarsystem weist einen Sender und einen oder mehrere Empfänger auf, wobei zum Erkennen des Objektes ein "Doppler-Verfahren" und zum Bestimmen von Abstand und Geschwindigkeit ein FMCW- (frequency modulated continuous wave) Modus verwendet wird. Die Radarmodule strahlen kontinuierliche Wellen ab, wobei das Radarsignal modulierbar ist. Beispielsweise kommen Sägezahnsignale, Dreieckssignale oder trapezförmige Signale zum Einsatz. Die Sicherheitsvorrichtung kann mittels einer tragbaren Einrichtung gesteuert, aktiviert und/oder deaktiviert werden.

Die Erkennungs- und Beleuchtungseinheit kann beispielsweise in einer Straßenlampe integriert sein. Das Radarsystem umfasst dabei drei Reihen von Radarmodulen. In anderen Ausführungsformen kann das Sicherheitssystem auch als kompaktes System an jedem beliebigen Einsatzort, beispielsweise an Masten oder Lampenpfosten, befestigt werden. In der Druckschrift WO 2011/040816 A1 sind die verwendeten Sensoren in einem Vorderbereich einer Straßenlampe vorgesehen. Die Straßenlampe weist ferner eine durch die Sensoren aktivierte bewegliche Beleuchtungsvorrichtung zum direkten Anstrahlen eines Objektes sowie eine stationäre Beleuchtungsvorrichtung auf. Die stationäre Beleuchtungsvorrichtung wird als herkömmliche Straßenlampe eingesetzt.

Die Druckschrift US 2009/0267525 A1 offenbart eine einzige LED-Straßenlampe mit vier um einen Mast verteilten Einzelleuchten, wobei in jeder der Einzelleuchten ein einziger Sensor montiert ist, und einem mit den Sensoren gekoppelten Steuer- und Antriebsschaltkreis. Bei der LED-Straßenlampe können die Einzelleuchten bei Detektion eines Fußgängers und dessen Näherkommen nach und nach angeschaltet und bei dessen Entfernung nach und nach ausgeschaltet werden können. Als Sensor wird ein Infrarot- oder Schallsensor verwendet.

Die Druckschrift US 2010/0001652 A1 beinhaltet ein Straßenbeleuchtungssystem mit mehreren Straßenlampen. Durch Controller, die an jeder der Straßenlampen jeweils am Mast vorgesehen sind, wird detektiert, ob und mit welcher Geschwindigkeit sich ein Fahrzeug den Straßenlampen nähert. Bei Annäherung des Fahrzeugs wird die Beleuchtungsstärke der Straßenlampen von den Controllern von einem OFF- oder Stand-by-Modus in einen Beleuchtungsmodus erhöht, wobei die Annäherungsinformation von einem Controller an den nächsten weitergegeben wird. Die Controller arbeiten mit Bilderkennungssensoren, auf Basis von Radar, Laser oder elektromagnetischen Sensoren. Es können mehrere Controller verwendet werden, die einander überlappende Bereiche überwachen.

Es ist daher die Aufgabe der vorliegenden Erfindung, eine Verkehrsflächenbeleuchtungsvorrichtung zur Verfügung zu stellen, welche eine bedarfsgerechte Beleuchtung von Verkehrsflächen ermöglicht, welche zuverlässig funktioniert und welche wirtschaftlich realisierbar ist.

Die Aufgabe wird durch eine Verkehrsflächenbeleuchtungsvorrichtung der oben genannten Gattung gelöst, wobei an wenigstens zwei der mehreren Leuchten jeweils wenigstens zwei frequenzmodulierte Dauerstrichradarsensoren vorgesehen sind, wobei die jeweiligen wenigstens zwei frequenzmodulierten Dauerstrichradarsensoren um den Umfang der jeweiligen Leuchte oder eines Mastes, an dem die jeweilige Leuchte befestigt ist, verteilt vorgesehen sind, wobei die jeweilige Steuereinrichtung für das wenigstens eine Leuchtmittel der jeweiligen Leuchte ein oder mehrere Anschlüsse für die jeweiligen einzelnen frequenzmodulierten Dauerstrichradarsensoren aufweist, und wobei die Kommunikationsverbindung ausgelegt ist, die Information, die in einem der wenigstens zwei frequenzmodulierten Dauerstrichradarsensoren einer der wenigstens zwei Leuchten gewonnen wurde, auch weiteren der mehreren Leuchten der Verkehrsflächenbeleuchtungsvorrichtung zur Verfügung zu stellen.

Unter einem frequenzmodulierten Dauerstrichradarsensor wird erfindungsgemäß ein Radarsensor verstanden, der kontinuierlich eine elektromagnetische Strahlung aussendet, deren Frequenz moduliert wird. Die Modulation der Frequenz erlaubt die Ermittlung der Entfernung der erkannten Objekte. Je nach Art der Modulation werden verschiedene Arten des frequenzmodulierten Dauerstrichradarsensors unterschieden. Für die Verkehrsflächenbeleuchtungsvorrichtung kommt vorzugsweise eine lineare Modulation mit einer Dreieck- oder Sägezahnfunktion (FMCW-Verfahren) oder eine Frequenzumtastung mit einer Rechteckfunktion (FSK-Verfahren) zum Einsatz. Es sind aber auch andere Modulationsarten sowie Kombinationen verschiedener Modulationsarten untereinander oder mit einem unmodulierten Dauerstrichradarsensor (CW-Sensor) denkbar. Durch die Kombination verschiedener Modulationsarten kann die Anzahl unterscheidbarer Sensoren erhöht werden, sodass eine Vielzahl verschiedener Sensoren in der erfindungsgemäßen Verkehrsflächenbeleuchtungsvorrichtung unabhängig nebeneinander arbeiten können. Wird zusätzlich zu den wenigstens zwei frequenzmodulierten Dauerstrichradarsensoren wenigstens ein unmodulierter Dauerstrichradarsensor (CW-Sensor) eingesetzt, kann durch den unmodulierten Dauerstrichradarsensor ein Objekt zunächst erfasst werden, während durch die jeweiligen frequenzmodulierten Dauerstrichradarsensoren die Geschwindigkeit dieses Objektes erfasst werden kann. Dies erhöht die Erfassungssicherheit der erfindungsgemäßen Verkehrsflächenbeleuchtungsvorrichtung.

Es hat sich erfindungsgemäß herausgestellt, dass frequenzmodulierte Dauerstrichradarsensoren ideale Sensoren zum Schalten von Verkehrsflächenbeleuchtungsvorrichtungen sind, da sie sowohl technisch als auch ökonomisch den gestellten Aufgaben im Zusammenhang mit einem situationsabhängigen Beleuchten einer Verkehrsfläche gewachsen sind. Sie beinhalten eine hochentwickelte Signalverarbeitungs- und Auswerteelektronik und liefern aufbereitete und bewertete Daten. Dauerstrichradarsensoren strahlen kontinuierlich elektromagnetische Strahlung ab und empfangen gleichzeitig reflektierte Strahlung. Sie sind daher im Gegensatz zu Impulsradarsensoren pausenlos einsatzbereit. Die verwendete Radarstrahlung hat Reichweiten von vielen Metern. Sie durchdringt auch Niederschläge und ist allwettertauglich. Durch die hohe Reichweite der Radarstrahlung ist eine Positionierung der Sensoren in größerer Höhe, beispielsweise in der Nähe der Leuchtmittel von Straßenleuchten möglich. An erhöhten Einbauorten werden die Sensoren kaum verschmutzt, sie sind gleichzeitig sehr gut vor Vandalismus geschützt, und die Sensoren können von dieser erhöhten Position aus einen großen Verkehrsflächenbereich erfassen.

Durch die Frequenzmodulation der Radarstrahlung kann im Falle der linearen Modulation (FMCW) aus der Frequenzdifferenz zwischen gesendeter und reflektierter Radarstrahlung die Laufzeit bestimmt werden und daraus kann wiederum der Reflexionsort der Radarstrahlung berechnet werden. Im Falle der Rechteckmodulation (FSK) können ähnlich wie beim unmodulierten Dauerstrichradar (CW-Sensor) nur bewegte Objekte anhand des Dopplereffekts erkannt werden. Aus der Phasenverschiebung der Dopplersignale bei den beiden diskreten Radarfrequenzen kann zusätzlich die Entfernung des reflektierenden Objektes zum Sensor und damit der Reflexionsort errechnet werden.

Durch die von den jeweiligen frequenzmodulierten Dauerstrichradarsensoren jeweils ermittelten Ortsinformationen ist es möglich, nur definierte Ortsbereiche, die in der Nähe der Verkehrsfläche liegen, in die Sensorauswertung einzubeziehen. Andere Signale, die beispielsweise durch Niederschläge in Sensornähe verursacht werden, können hingegen durch geeignete Filter aus der Auswertung ausgeschlossen werden. Durch diese Ortsfilterung ist eine hohe Zuverlässigkeit der Sensorfunktion gewährleistet, die die frequenzmodulierten Dauerstrichradarsensoren gegenüber anderen Sensoren, die im Stand der Technik bekannt sind, herausstellen.

Frequenzmodulierte Dauerstrichradarsensoren sind nicht nur technisch hervorragende Lösungen für die gestellte Aufgabe. Sie können auch als Mikrosysteme kostengünstig, präzise und in hoher Stückzahl produziert werden. In einer Serienfertigung der Sensoren ist es möglich, Kosten zu erreichen, die durch Kosteneinsparung bei Nichtbenutzung von Leuchten schnell amortisiert werden können. Die Installationskosten für frequenzmodulierte Dauerstrichradarsensoren können beispielsweise bei der industriellen Herstellung von Leuchten verschwindend klein im Vergleich zu Installationskosten von Sensoren wie beispielsweise Induktionsschleifen, die in den Straßenbelag eingebracht werden, sein.

Die in der erfindungsgemäßen Lösung vorgeschlagenen jeweiligen wenigstens zwei frequenzmodulierten Dauerstrichradarsensoren sind dafür vorgesehen, jeweils Daten zu liefern, die dem Ein- oder Ausschalten von Leuchtmitteln in Leuchten bzw. zur Festlegung der von den Leuchtmitteln erzeugten Lichtstärke dienen. Die jeweiligen wenigstens zwei Dauerstrichradarsensoren sind mit einer jeweiligen Steuereinrichtung verbunden, die die gewünschten Leuchtmittelzustände, wie z.B. "An", "Aus", "reduzierte Helligkeit", in eine entsprechende Leuchtmittelansteuerung umsetzt. Viele Leuchtmittel werden nicht direkt mit ihrer Betriebsspannung verbunden, sondern sie sind mit einer erfindungsgemäß vorgesehenen Steuereinrichtung gekoppelt, die einerseits ein sicheres Starten der Leuchtmittel ermöglicht und andererseits einen verschleißarmen Betrieb der Leuchtmittel sicherstellt.

Die jeweilige Steuereinrichtung kann optional auch weitere Funktionen, wie beispielsweise eine Helligkeitseinstellung des Leuchtmittels, übernehmen. Teilweise werden die Steuereinrichtungen auch als Vorschaltgeräte bezeichnet. Die jeweilige Steuereinrichtung muss in der Regel speziell für das verwendete wenigstens eine Leuchtmittel dimensioniert werden und kann deshalb gemeinsam mit dem wenigstens einen Leuchtmittel als eine Einheit gebaut werden, ein bekanntes Beispiel dafür ist eine Energiesparlampe.

Die in der Erfindung eingesetzte jeweilige Steuereinrichtung kann aber auch als separate Einheit oder als Bestandteil der Sensorelektronik realisiert werden. Hierfür können verschiedene im Stand der Technik bekannte Steuereinrichtungen für verschiedene Leuchtmittel eingesetzt werden. Für Natriumdampflampen sind beispielsweise oft noch veraltete Vorschalteinrichtungen im Einsatz, die eine Vorschaltdrossel und einen Starter umfassen. Es sind aber auch moderne Steuereinrichtungen für Gasentladungslampen bekannt, die eine hohe Effizienz erreichen und ein schnelles Starten der Leuchtmittel bei geringem Verschleiß erlauben.

Das in der erfindungsgemäßen Verkehrsflächenbeleuchtungsvorrichtung verwendete Leuchtmittel kann ein beliebiges Leuchtmittel sein, das für Straßenbeleuchtungszwecke geeignet ist. Derzeit werden in Leuchten effiziente Gasentladungslampen, wie beispielsweise Natriumdampflampen, Quecksilberdampflampen, Halogen-Metalldampflampen oder Leuchtstofflampen bevorzugt. Darüber hinaus sind auch ohne Weiteres Leuchtdioden-Leuchtmittel (LED) in der Erfindung einsetzbar. Die Haltbarkeit von LED überschreitet bereits die von Gasentladungslampen. Die Effizienz von LED erreicht zum Beispiel die gleiche Größenordnung, in der sich die höchste Effizienz von Gasentladungslampen befindet, und die beständig fallenden Kosten für LED-Leuchtmittel erreichen für Verkehrsflächenbeleuchtungssysteme akzeptable Bereiche.

In der erfindungsgemäßen Verkehrsflächenbeleuchtungsvorrichtung sind wenigstens zwei frequenzmodulierte Dauerstrichradarsensoren um den Umfang der jeweiligen Leuchte oder um den Umfang eines Mastes, an dem die jeweilige Leuchte oder das wenigstens eine Leuchtmittel befestigt ist, verteilt vorgesehen. Hierdurch können verschiedene Bereiche in der Umgebung der jeweiligen Leuchte erfasst werden. Beispielsweise kann eine Fahrbahn und ein Fußweg separat überwacht werden, oder es können verschiedene Richtungen der Fahrbahn, beispielsweise zwei Straßenzüge im Eckbereich einer Kreuzung, erfasst werden.

Es hat sich als besonders vorteilhaft erwiesen, das jeweilige Radar-Front-End der wenigstens zwei frequenzmodulierten Dauerstrichradarsensoren so auszubilden, dass es einen rotationssymmetrischen Öffnungswinkel zwischen 45° und 90° aufweist.

Je nach den örtlichen Gegebenheiten des zu überwachenden Bereiches kann auch ein asymmetrisches Erfassungsfeld vorteilhaft sein, zum Beispiel zur Überwachung eines Gehweges. In diesem Fall bildet das Erfassungsfeld einen Kegel mit elliptischem Querschnitt. Der Öffnungswinkel liegt in diesem Fall im Bereich zwischen 45° und 90° in der einen Dimension und zwischen 20° und 45° in der zweiten Dimension. Bei diesen Öffnungswinkeln hat sich gezeigt, dass ein Optimum zwischen der Größe des erfassbaren Bereiches und der sicheren Auswertbarkeit von Radarsignalen unter Berücksichtigung der konkreten Aufgabe erreicht wird.

In einer Weiterbildung der erfindungsgemäßen Verkehrsflächenbeleuchtungsvorrichtung sind die wenigstens zwei frequenzmodulierten Dauerstrichradarsensoren jeweils zur Messung der Entfernung von Objekten, deren Geschwindigkeit und/oder deren Bewegungsrichtung ausgebildet. Der Radarsensor soll in seinem Erfassungsbereich Objekte, beispielsweise Fahrzeuge, oder Personen erkennen. Durch die Extraktion von möglichst vielen Informationen aus den Radarsensorrohdaten über die Entfernung der identifizierten Objekte, die Geschwindigkeit von Objekten und die Bewegungsrichtung der Objekte ist eine optimale Objekterkennung möglich. Die Informationen über die Geschwindigkeit und die Bewegungsrichtung von Objekten können entweder aus dem zeitlichen Vergleich von mehreren aufgenommenen "Radar-Bildern" oder aus der Dopplerfrequenz, die sich aus der Bewegungsgeschwindigkeit und der Bewegungsrichtung eines von dem Radar erfassten Objektes ergibt, gewonnen werden.

In einem weiteren Ausführungsbeispiel der erfindungsgemäßen Verkehrsflächenbeleuchtungsvorrichtung sind die wenigstens zwei frequenzmodulierten Dauerstrichradarsensoren jeweils zur Ausgabe der Verkehrsdichte und/oder eines Helligkeitssollwertes ausgebildet. Die Steuerung der Leuchten muss nicht direkt durch die Dauerstrichradarsensoren selbst erfolgen, sondern die Dauerstrichradarsensoren können jeweils ihre Informationen in Form einer Verkehrsdichteinformation und/oder eines berechneten Helligkeitssollwertes an ein Auswertemodul weitergeben, welches auch Informationen von weiteren Dauerstrichradarsensoren in weiteren Leuchten sammeln kann und das seinerseits die Steuereinrichtungen für die Leuchtmittel ansteuert.

In einer weiteren möglichen Ausbildung der erfindungsgemäßen Verkehrsflächenvorrichtung ist an den wenigstens zwei der mehreren Leuchten jeweils wenigstens eine Schnittstelle für die Messergebnisse der jeweiligen wenigstens zwei frequenzmodulierten Dauerstrichradarsensoren vorgesehen. Es hat sich sowohl in der Entwicklung als auch in der Wartung als günstig erwiesen, ein System modular aufzubauen und an den Modulgrenzen Schnittstellen vorzusehen. Eine Leuchte ist in der beschriebenen Verkehrsflächenbeleuchtungsvorrichtung ein solcher modularer Baustein, der mit einer Schnittstelle ausgestattet sein kann. Die Schnittstelle kann sowohl eine drahtgebundene Schnittstelle als auch eine drahtlose, beispielsweise eine Bluetooth- oder eine WLAN-Schnittstelle, sein. Die Schnittstelle kann auch einen drahtgebundenen und einen drahtlosen Teil aufweisen.

Es hat sich als besonders vorteilhaft erwiesen, die erfindungsgemäße Verkehrsflächenbeleuchtungsvorrichtung so auszubilden, dass sie über eine Fernbedienungseinrichtung einrichtbar und/oder steuerbar ist. Die Verkehrsflächenbeleuchtungsvorrichtung muss an die örtlichen Gegebenheiten ihrer Aufstellung angepasst werden. Durch den erhöhten Einbauort des Dauerstrichradarsensors ist dieser für Einrichtungs- und Steuerarbeiten nur unter dem kostenintensiven Einsatz von Hubmitteln direkt erreichbar. Daher ist es wirtschaftlich eine Fernbedienungseinrichtung vorzusehen, mit welcher die Verkehrsflächenbeleuchtungsvorrichtung vom Boden aus einrichtbar und steuerbar ist.

In einem Verfahren zum situationsabhängigen Beleuchten einer Verkehrsfläche mit einer Verkehrsflächenbeleuchtungsvorrichtung mit wenigstens einer Leuchte, die wenigstens ein Leuchtmittel aufweist, messen wenigstens zwei an der Verkehrsflächenbeleuchtungsvorrichtung vorgesehene frequenzmodulierte Dauerstrichradarsensoren eine Entfernung von Personen oder Objekten, wobei das Entfernungsmesssignal an eine Steuereinrichtung für das Leuchtmittel übermittelt wird und die Steuereinrichtung über einen mit der Steuereinrichtung gekoppelten Dimmer oder Schalter das Leuchtmittel in Abhängigkeit von dem Entfernungsmesssignal dimmt oder ein- oder ausschaltet.

Das Verfahren ist eine Lösung für den seit langem bestehenden Bedarf, Verkehrsflächen situationsabhängig zu beleuchten. Situationsabhängige Beleuchtung bedeutet bei einfachster Betrachtung, dass die Verkehrsflächenbeleuchtungsvorrichtung nur bei Dunkelheit und Verkehrsflächenbenutzung angeschaltet wird. In einer differenzierteren Ausbildung bedeutet situationsabhängige Beleuchtung auch eine helligkeitsgeregelte Beleuchtung, die bedarfsgerecht die Helligkeit von Leuchten auf ein sinnvolles Maß reduziert. Eine reduzierte Helligkeit kann beispielsweise dann sinnvoll sein, wenn auf einer Straße eine hohe Kraftfahrzeugverkehrsdichte besteht und eine lückenlose ausreichende Beleuchtung durch Autoscheinwerfer besteht. Eine reduzierte Helligkeit kann beispielsweise aus Sicherheitsgründen auch statt einer vollständigen Abschaltung bei Nichtbenutzung der Verkehrsfläche gewünscht sein. Auf Fuß- und Radwegen kann die Helligkeit beispielsweise auch dann reduziert werden, wenn kein Blendlicht von Autoscheinwerfern vorliegt.

Unter Verkehrsflächen werden verschiedene Straßen, wie Stadtstraßen, Landstraßen, Kraftfahrtstraßen oder Anwohnerstraßen, Verkehrsflächen, wie Radwege, Fußwege oder Parkflächen, sowie sonstige Verkehrsflächen, wie beispielsweise Grünanlagen oder historische Gebäudekomplexe, verstanden. Die in dem Verfahren anwendbaren Leuchten und Leuchtmittel sind gewöhnliche Lampen, Straßenleuchten oder Scheinwerfer aus dem Stand der Technik oder anderweitige Leuchten oder Leuchtmittel. Das Leuchtmittel und seine Steuereinrichtung müssen allerdings so ausgebildet sein, dass ein häufiges Schalten oder Dimmen möglich ist.

Eine situationsabhängige Beleuchtung von öffentlichen Verkehrsflächen ist deshalb bisher kaum realisiert, weil bisher keine Sensoren bekannt waren, die diese Aufgabe zuverlässig und zu wirtschaftlichen Preisen ausführen konnten. Frequenzmodulierte Dauerstrichradarsensoren sind nun geeignete Sensoren, die Personen und Fahrzeuge auf einer Verkehrsfläche erfassen können, die diese Aufgabe zuverlässig meistern und die dennoch zu geringen Kosten herstellbar sind.

Die jeweiligen wenigstens zwei frequenzmodulierten Dauerstrichradarsensoren können jeweils Informationen über erkannte Objekte direkt in einen Steuersollzustand für das jeweilige wenigstens eine Leuchtmittel umsetzen, der beispielsweise "An", "Aus" oder "reduzierte Helligkeit" sein kann, und damit die jeweilige Steuereinrichtung ansteuern. Die jeweilige Steuereinrichtung ist dafür zuständig, den gewünschten Steuerzustand in einen entsprechenden physischen Leuchtmittelzustand umzusetzen. Die Umsetzung des Steuerzustandes geschieht im Falle einer An-Aus-Funktion über einen Schalter oder im Falle einer geregelten Helligkeitsfunktion über einen Dimmer. Mit der Bezeichnung Schalter und Dimmer ist dabei keine Festlegung auf eine bestimmte elektronische Realisierung verbunden. Im Gegenteil hängt die elektronische Realisierung des Schalters oder des Dimmers in starkem Maß von dem verwendeten Leuchtmittel ab und kann je nach verwendetem Leuchtmittel sehr unterschiedlich ausgebildet sein. Die Begriffe Schalter und Dimmer sind auf die Funktion des Schaltens oder Dimmens bezogen.

In einer erweiterten Ausführung des Verfahrens messen die jeweiligen wenigstens zwei frequenzmodulierten Dauerstrichradarsensoren zusätzlich zur Entfernung jeweils die Geschwindigkeit der Personen oder Objekte in ihrem jeweiligen Erfassungsbereich. Die jeweiligen wenigstens zwei frequenzmodulierten Dauerstrichradarsensoren verwenden die jeweilige Geschwindigkeitsinformation für eine verbesserte Objekterkennung; die Geschwindigkeitsinformation kann optional auch ausgegeben werden um sie für weitere Aufgaben nutzbar zu machen. Die Geschwindigkeit eines erfassten Objektes ist ein weiteres wichtiges Indiz dafür, ob das Anschalten der Verkehrsflächenbeleuchtung benötigt wird oder nicht. Beispielsweise ist für ein geparktes Fahrzeug kein Betrieb der Verkehrsflächenbeleuchtung erforderlich, hingegen aber für ein fahrendes Fahrzeug. In einem anderen Beispiel kann der Start eines Leuchtmittels bei langsamer Annäherung eines Fußgängers langsamer ausgeführt werden.

In einer günstigen Erweiterung des Verfahrens weist die Verkehrsflächenbeleuchtungsvorrichtung ein Auswertemodul auf, das zeitlich aufeinander durch die jeweiligen wenigstens zwei frequenzmodulierten Dauerstrichradarsensoren jeweils erfasste Szenen der Verkehrsfläche vergleicht. Durch das Speichern und Vergleichen von Szenen ist ein Selbsteinlernen der Verkehrsflächenbeleuchtungsvorrichtung möglich, durch welche die Funktionssicherheit verbessert und der Einrichtungs- und Wartungsaufwand minimiert werden kann.

In dem Verfahren erfassen wenigstens zwei um den Umfang der Leuchte oder eines Mastes, an dem die Leuchte oder das Leuchtmittel angebracht ist, verteilt vorgesehene frequenzmodulierte Dauerstrichradarsensoren unterschiedliche Sektoren der Verkehrsfläche. Unterschiedliche Sektoren können beispielsweise Straßenflächen und Gehwegflächen oder zwei Straßenzüge an einer Kreuzungsecke sein. Die wenigstens zwei Dauerstrichradarsensoren werden beispielsweise dazu verwendet, den Erfassungsbereich zu erweitern oder unterschiedliche Erfassungsbereiche unterschiedlich zu behandeln.

In einer weiteren Ausführungsform des Verfahrens vergleicht das Auswertemodul die in unterschiedlichen Sektoren erfassten Szenen und/oder kombiniert die Szenen miteinander. Durch die Kombination der Informationen aus unterschiedlichen Sektoren kann eine größere Szene konstruiert werden, in welcher eine zuverlässigere Charakterisierung der Szene möglich ist.

In einer günstigen Ausbildung des Verfahrens werden die jeweiligen von den wenigstens zwei frequenzmodulierten Dauerstrichradarsensoren erfassten Messsignale in Abhängigkeit von der ermittelten Entfernung zu der Leuchte in wenigstens einem Nahbereich und in einem Fernbereich erfasste Messsignale eingeordnet. Diese Ausbildung des Verfahrens ist beispielsweise dann interessant, wenn der Start des Leuchtmittels nicht sofort möglich ist, sondern eine gewisse Zeit in Anspruch nimmt. In diesem Fall kann beispielsweise bei einem entfernten Fußgänger die Leuchte bereits gestartet werden, bevor der Fußgänger den Leuchtbereich betritt, sodass beim Eintritt des Fußgängers in den Beleuchtungsbereich der Leuchte bereits die volle Leuchtstärke erreicht ist.

In dem Verfahren weist die Verkehrsflächenbeleuchtungsvorrichtung mehrere, in einer Gruppe angeordnete Leuchten auf, wobei jede der Leuchten wenigstens ein Leuchtmittel aufweist und an mehreren der Leuchten wenigstens zwei frequenzmodulierte Dauerstrichradarsensoren vorgesehen sind. Durch die Kommunikation mehrerer Leuchten miteinander können die Sensorinformationen einer Leuchte auch für die Steuerung einer anderen Leuchte verwendet werden. Dadurch steigt einerseits der gesamte Erfassungsbereich von Sensoren zur Steuerung einer Leuchte, und andererseits wird auch die Reaktionszeit zum Schalten und Steuern von Leuchten erweitert. Durch die langen Reaktionszeiten können auch Steuereinrichtungen und Leuchtmittel mit langen Startzeiten eingesetzt werden.

In einer alternativen Ausbildung des Verfahrens stellt die jeweilige Steuereinrichtung dann, wenn durch die jeweiligen wenigstens zwei frequenzmodulierten Dauerstrichradarsensoren Personen oder Objekte in einem einen vorgegebenen Mindestabstand übersteigenden Erfassungsbereich erfasst werden, die Leuchtintensität des wenigstens einen Leuchtmittels auf einen Stand-by-Wert ein. In diesem Fall schaltet die Steuereinrichtung die Leuchten bei Nichtbenutzung der Verkehrsfläche also nicht aus, sondern sie reduziert nur deren Helligkeit durch Dimmen. Diese Option kann beispielsweise dann interessant sein, wenn die Leuchtmittel technisch bedingt zu langsam starten oder wenn aus Sicherheitsgründen eine Mindestbeleuchtung gewünscht ist.

In einer optionalen Ausgestaltung des Verfahrens stellt die jeweilige Steuereinrichtung die Anschaltdauer und/oder die Leuchtintensität des wenigstens einen Leuchtmittels in Abhängigkeit von der durch die jeweiligen wenigstens zwei frequenzmodulierten Dauerstrichradarsensoren jeweils erfassten Häufigkeit von Personen- oder Objektbewegungen ein. In dieser Variante erfolgt die Steuerung der Verkehrsflächenbeleuchtungsvorrichtung nicht in Abhängigkeit von der Objektbewegung einzelner Objekte sondern in Abhängigkeit von einer Verkehrsstatistik. So kann beispielsweise ein Abschalten von Leuchten wegen hoher Wahrscheinlichkeit eines wiederholten Anschaltbedarfs unterbleiben. Bei geringer Wahrscheinlichkeit des Auftauchens einer Person oder eines Objektes auf der Verkehrsfläche kann hingegen sofort nach dem Verlassen des letzten Objektes des Erfassungsbereiches der jeweiligen wenigstens zwei frequenzmodulierten Dauerstrichradarsensoren das Leuchtmittel ausgeschaltet oder in seiner Leuchtintensität reduziert werden.

In einer bevorzugten Variante des Verfahrens wird die Verkehrsflächenbeleuchtungsvorrichtung mit einer Fernbedienungseinrichtung eingerichtet und/oder gesteuert. Eine Einrichtung der Verkehrsflächenbeleuchtungsvorrichtung ist mindestens bei der Installation notwendig, es kann aber auch sein, dass nach der Installation, z.B. wegen einer beobachteten Fehlfunktion, wegen einer veränderten Geschwindigkeitsbegrenzung oder auch wegen eines gealterten Leuchtmittels eine Änderung der Einrichtung erforderlich ist. Einrichtungs- und Steuerungsarbeiten können mit einer Fernbedienung unaufwändig realisiert werden. Durch die Nutzung von Fernbedienungen ist es auch möglich, einzelne Benutzer, wie z.B. Anwohner oder Sternwarten, mit Schaltrechten für Leuchten auszustatten.

Die vorliegende Erfindung soll im Folgenden anhand von Figuren näher erläutert werden. Dabei zeigt:
- Figur 1: eine schematische Darstellung einer Verkehrsflächenbeleuchtungsvorrichtung;
- Figur 2: eine Draufsicht auf Erfassungsbereiche von frequenzmodulierten Dauerstrichradarsensoren einer Verkehrsflächenbeleuchtungsvorrichtung; und
- Figur 3: ein mögliches Ausführungsbeispiel einer erfindungsgemäßen Verkehrsflächenbeleuchtungsvorrichtung.

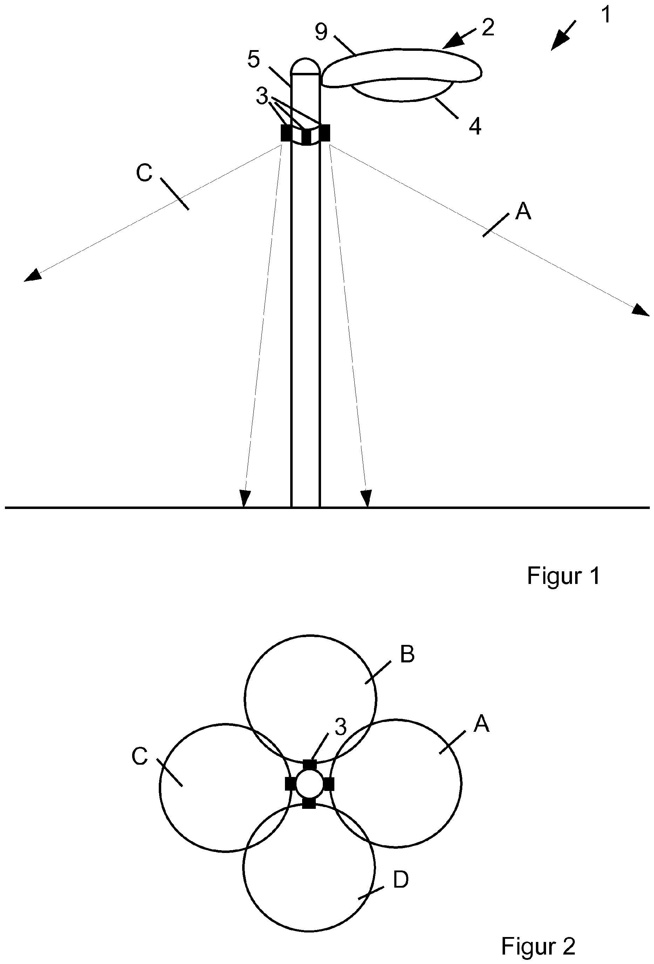

Fig. 1 zeigt schematisch ein Beispiel für eine Verkehrsflächenbeleuchtungsvorrichtung 1 anhand einer Straßenleuchte. Die Verkehrsflächenbeleuchtungsvorrichtung 1 ist vorrangig als Beleuchtungsvorrichtung für Straßen, Wege und Parkflächen einsetzbar; sie kann aber auch als Beleuchtungsvorrichtung beispielsweise für historische Gebäude, für Parkanlagen oder Ähnliches verwendet werden. Die Verkehrsflächenbeleuchtungsvorrichtung 1 weist in dem dargestellten Ausführungsbeispiel eine Leuchte 2 mit einem Leuchtmittel 4 auf, welches an einem Mast 5 befestigt ist.

In anderen, nicht dargestellten Beispielen umfasst die Verkehrsflächenbeleuchtungsvorrichtung 1 zwei oder eine Vielzahl von Leuchten 2. In der Verkehrsflächenbeleuchtungsvorrichtung 1 ist die Leuchte 2 eine Standleuchte. In anderen, nicht dargestellten erfindungsgemäßen Verkehrsflächenbeleuchtungsvorrichtungen kann die Leuchte 2 auch eine Deckenleuchte, beispielsweise in einem Tunnel, eine allseitig lichtabstrahlende Straßenleuchte, ein Scheinwerfer, beispielsweise zur Beleuchtung von Gebäuden oder Grünflächen, oder eine andere Beleuchtungsvorrichtung sein.

Die dargestellte Verkehrsflächenbeleuchtungsvorrichtung 1 weist mehrere frequenzmodulierte Dauerstrichradarsensoren 3 auf, die am Umfang des Mastes 5 der Leuchte 2, vorzugsweise mit einer flexiblen Modulbauweise, vorgesehen sind. Die Dauerstrichradarsensoren 3 können in anderen Fällen aber auch an anderen geeigneten Orten, wie beispielsweise in der Nähe des Leuchtmittels 4, angeordnet sein. So können ein oder mehrere Dauerstrichradarsensoren 3 beispielsweise an oder innerhalb einer wie in der Ausführungsform von Fig. 1 verwendeten Leuchtmittelabdeckung 9 vorgesehen sein.

In dem schematisch dargestellten Ausführungsbeispiel von Fig. 1 sind drei frequenzmodulierte Dauerstrichradarsensoren 3 sichtbar, wobei ein vierter Dauerstrichradarsensor 3 durch den Mast 5 verdeckt ist. In anderen, nicht dargestellten Ausführungsvarianten der Erfindung kann es grundsätzlich auch ausreichend sein, nur einen frequenzmodulierten Dauerstrichradarsensor 3 oder zwei, drei oder mehr als vier Dauerstrichradarsensoren 3 zu verwenden. Es werden jeweils so viele Dauerstrichradarsensoren 3 eingesetzt, wie nötig sind, um mit den Sensorfeldern der Dauerstrichradarsensoren 3 eine zu beleuchtende Verkehrsfläche abdecken zu können. Hierfür hat sich die in Fig. 1 dargestellte Anordnung mit vier Dauerstrichradarsensoren 3 als besonders vorteilhaft erwiesen.

Jeder frequenzmodulierte Dauerstrichradarsensor 3 hat einen eigenen Erfassungsbereich, der sich von einem Nahbereich in der Nähe des Mastes 5 in einem Winkel von 45° bis 90° bis zu Entfernungen von etwa 30 Metern erstreckt. In Fig. 1 sind die Erfassungsbereiche A und C von zwei frequenzmodulierten Dauerstrichradarsensoren 3 skizziert.

Diese Erfassungsbereiche sind jedoch nur als Beispiele anzusehen, wobei erfindungsgemäß vorgesehen ist, dass jedes Sensorfeld jeder der verwendeten Dauerstrichradarsensoren 3 individuell einstellbar ist.

Um eine möglichst hohe funktionelle Sicherheit der Verkehrsflächenbeleuchtungsvorrichtung 1 zur Verfügung zu stellen, ist es in der dargestellten Ausführungsform vorgesehen, dass die frequenzmodulierten Dauerstrichradarsensoren 3 in zyklischen Abständen eine Funktionsbestätigung abgeben. Fällt ein Dauerstrichradarsensor 3 aus, wird durch die unten näher beschriebene, in der Verkehrsflächenbeleuchtungsvorrichtung 1 vorgesehene Steuereinrichtung eine entsprechende Fehlermeldung erzeugt.

Des Weiteren ist die Verkehrsflächenbeleuchtungsvorrichtung 1 derart ausgebildet, dass Einstellungen der Reichweite der einzelnen Dauerstrichradarsensoren 3 während der Montage der Sensoren 3 vorgenommen werden oder im eingebauten Zustand der Sensoren 3 durch entsprechende Befehle über eine an einer Steuereinrichtung für die Verkehrsflächenbeleuchtungsvorrichtung 1 vorgesehene Datenschnittstelle vorgenommen werden. Die frequenzmodulierten Dauerstrichradarsensoren 3 sind separat zu- und abschaltbar.

Die frequenzmodulierten Dauerstrichradarsensoren 3 sind hochintegrierte intelligente Sensoren, die eine Antenne, das sogenannte Radar-Front-End, welches elektromagnetische Strahlen aussendet und empfängt, und eine Elektronik zur Signalerzeugung zum Signalempfang und zur Signalverarbeitung aufweisen. In dem dargestellten Ausführungsbeispiel arbeiten die Radarsensoren 3 in einem Frequenzbereich von 24 bis 24, 25 GHz; in anderen, nicht dargestellten Ausführungsbeispielen können die frequenzmodulierten Dauerstrichradarsensoren 3 auch in anderen zulässigen Mikrowellenbereichen arbeiten.

Mit Hilfe des von den Dauerstrichradarsensoren 3 ausgeführten FMCW-Messverfahrens werden Bewegungen im Erfassungsbereich der Sensoren 3 erkannt. Es können die Bewegungsrichtung zum Sensor 3 hin und vom Sensor 3 weg sowie die Bewegungsgeschwindigkeit eines Objektes oder einer Person in Sensorrichtung ermittelt werden, wobei die Objekte- bzw. Personengröße qualitativ abgeschätzt werden kann.

In der in Fig. 1 dargestellten Anordnung befinden sich die frequenzmodulierten Dauerstrichradarsensoren 3 und die Steuereinrichtung in einem abgeschlossenen Gehäuse. Es ist jedoch auch möglich, die Dauerstrichradarsensoren 3 unabhängig voneinander und/oder unabhängig von der Steuereinrichtung bei der Verkehrsflächenbeleuchtungsvorrichtung 1 vorzusehen.

Das Leuchtmittel 4 ist in dem dargestellten Ausführungsbeispiel eine Natriumdampflampe, die mit einer Lichtausbeute von 150 bis 200 Im/W (Lumen pro Watt) derzeit die effizienteste Variante einer Straßenbeleuchtung ist. Die dargestellte Leuchte 2 hat eine Leistung von 100 Watt und verbraucht bei einer Brenndauer von 4000 Stunden im Jahr Stromkosten von etwa 50 Euro. In anderen, nicht dargestellten Ausführungen können als Leuchtmittel 4 auch Natriumdampflampen anderer Leistungen, Metalldampflampen mit einem breiteren Lichtspektrum und verbesserter Farbwiedergabe oder andere Gasentladungslampen oder Leuchtdioden eingesetzt werden.

Die genannten hocheffizienten Leuchtmittel 4 können nicht direkt an Netzspannung betrieben werden, sondern sie benötigen für ihren Betrieb Steuereinrichtungen, die im Fall von Gasentladungslampen wenigstens zum Starten eine Hochspannung erzeugen oder die im Fall von Leuchtdioden eine präzise Strom- oder Spannungswandlung realisieren. In der dargestellten Anordnung ist eine derartige Steuereinrichtung in der Leuchte 2 integriert, sie ist jedoch nicht dargestellt, da sie nicht sichtbar ist. In anderen nicht dargestellten Varianten von Verkehrsflächenbeleuchtungsvorrichtungen 1 ist die Steuereinrichtung für das Leuchtmittel 4 entweder in dem Leuchtmittel 4 oder in dem oder den frequenzmodulierten Dauerstrichradarsensor(en) 3 integriert.

Die Steuereinrichtung weist je nach Bedarf und Konstruktion ein oder mehrere Anschlüsse für die einzelnen frequenzmodulierten Dauerstrichradarsensoren 3 auf. Dabei können die Sensorelemente 3, wie in Fig. 1 dargestellt, beispielsweise mittels einer Ringbefestigung an dem Mast 5 angebracht sein.

Fig. 2 zeigt eine Draufsicht auf Erfassungsbereiche von frequenzmodulierten Dauerstrichradarsensoren 3 einer Verkehrsflächenbeleuchtungsvorrichtung. Die Erfassungsbereiche A, B, C, D erstrecken sich von der Sensorposition jeweils in einen Erfassungsbereich, wobei die Sensorposition am Rand des Erfassungsbereiches vorgesehen ist. Jeder Erfassungsbereich erstreckt sich in einen Raumbereich, der nicht von Objekten, wie z.B. den Masten, abgeschattet ist. Durch die Verwendung von vier Dauerstrichradarsensoren 3 wird in dem dargestellten Beispiel der Raum um die Dauerstrichradarsensoren 3 vollständig erfasst. Je nach Aufstellungsort der Verkehrsflächenbeleuchtungsvorrichtung 1 kann aber auch nur ein frequenzmodulierter Dauerstrichradarsensor 3 oder es können zwei oder drei davon vorgesehen sein. In einer sehr einfachen Ausbildung der Verkehrsflächenbeleuchtungsvorrichtung 1 kann auch ein frequenzmodulierter Dauerstrichradarsensor 3 vorgesehen sein, der in der Draufsicht einen symmetrischen Erfassungsbereich um den Sensor 3 aufweist.

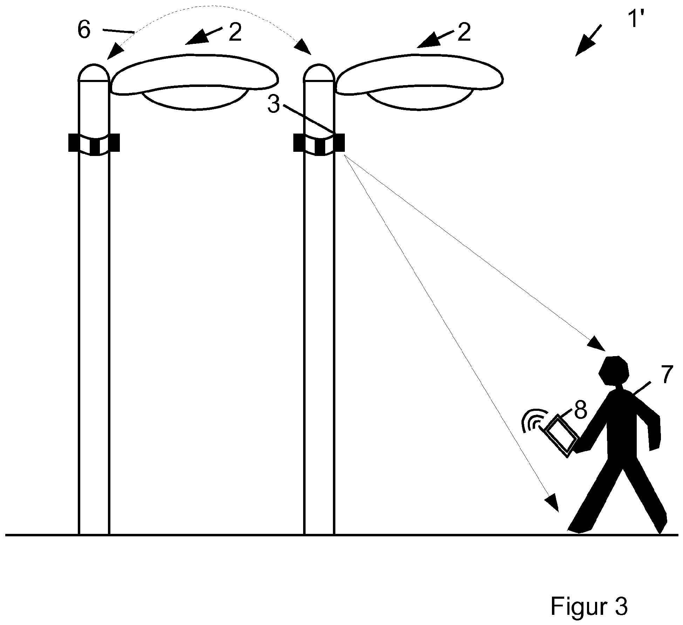

Fig. 3 zeigt ein Ausführungsbeispiel einer erfindungsgemäßen Verkehrsflächenbeleuchtungsvorrichtung 1', welche schematisch darstellt, dass die Verkehrsflächenbeleuchtungsvorrichtung 1' mehr als eine Leuchte 2 aufweist, in dem dargestellten Beispiel sind es der Einfachheit halber zwei. Die wenigstens zwei Leuchten 2 sind hier durch eine Kommunikationsverbindung 6 miteinander verbunden. In dem dargestellten Ausführungsbeispiel ist die Kommunikationsverbindung 6 eine drahtlose Funkverbindung. In anderen, nicht dargestellten Ausführungsbeispielen kann die Kommunikationsverbindung 6 auch eine drahtgebundene Verbindung sein. Durch die Kommunikation zwischen verschiedenen Leuchten 2 kann die Information, die in einem frequenzmodulierten Dauerstrichradarsensor 3 einer der Leuchten 2 gewonnen wurde, auch weiteren Leuchten 2 zur Verfügung gestellt werden. In dem dargestellten Ausführungsbeispiel wird eine Person 7 von dem Dauerstrichradarsensor 3 erfasst und die rechts dargestellte Leuchte 2 übermittelt das Schaltsignal zum Starten der Leuchte 2 auch an die links dargestellte Leuchte 2. Die Kommunikation zwischen den Leuchten 2 findet in dem dargestellten Ausführungsbeispiel direkt in einem Master-Slave-Prinzip statt. Bei der dargestellten Master-Slave-Funkstruktur erfolgt bei einer Aktivierung einer ersten Leuchte 2 durch Nutzungserkennung eine automatische Aktivierung einer definierten Anzahl weiterer Leuchten 2. Auf diese Weise kann die Straßenbeleuchtung im Hinblick auf den Energieverbrauch optimiert werden.

Die Leuchten 2 sind so ausgebildet, dass es möglich ist, mit Hilfe der integrierten Steuereinrichtung die jeweilige Anschalt- und/oder Ausschaltdauer der Leuchten 2 und/oder die Leuchtintensität der Verkehrsflächenbeleuchtungsvorrichtung 1' in Abhängigkeit von der durch die frequenzmodulierten Dauerstrichradarsensoren 3 ermittelten Verkehrsfrequenz einzustellen.

Darüber hinaus sind die Leuchten 2 so ausgebildet, dass es mittels der integrierten Steuereinrichtung möglich ist, die Leuchten 2 in Abhängigkeit von durch die frequenzmodulierten Dauerstrichradarsensoren 3 detektierten Witterungs- und Lichtverhältnissen zu aktivieren.

Die erfindungsgemäße Verkehrsflächenbeleuchtungsvorrichtung 1' ist derart ausgebildet, dass im Wesentlichen keine Beeinflussung der Sensortätigkeit durch Wetterunbeständigkeiten vorliegt. Dies ist durch den Einsatz der frequenzmodulierten Dauerstrichradarsensoren 3 möglich. Die Leuchten 2 der erfindungsgemäßen Verkehrsflächenbeleuchtungsvorrichtung 1' sind dadurch zuverlässig in einem Temperaturbereich von -20° C bis 85° C einsetzbar, optional sogar bis in einem Bereich von -35° C.

In anderen, nicht dargestellten Ausführungsbeispielen kann die Steuerung von mehreren Leuchten 2 in einem Auswertemodul zentralisiert werden, wobei dieses Auswertemodul beispielsweise in einer der Leuchten 2 positioniert sein kann.

In dem Beispiel von Fig. 3 ist die Person 7 zudem mit einer Fernbedienung 8 ausgestattet, durch welche die Person 7 die Leuchteigenschaften der Leuchten 2 beeinflussen kann.

Zudem sind die Leuchten 2 in der Lage, Objekte und/oder Personen mit definierten Grö-ßeneigenschaften zu erfassen und daraufhin ihre Leuchteigenschaften einzustellen. So kann beim Eintreten der Person 7 in das Erfassungsfeld einer der Leuchten 2 die jeweilige Leuchte 2 aktiviert werden.

## Patentansprüche

1. Verkehrsflächenbeleuchtungsvorrichtung (1') aufweisend:
- mehrere, in einer Gruppe angeordnete Leuchten (2), wobei jede der mehreren Leuchten (2) wenigstens ein Leuchtmittel (4) aufweist, wobei in jeder der mehreren Leuchten (2) eine Steuereinrichtung für das wenigstens eine Leuchtmittel (4) integriert ist oder eine Steuereinrichtung für das wenigstens eine Leuchtmittel (4) in dem wenigstens einen Leuchtmittel (4) jeder der mehreren Leuchten (2) integriert ist, und
- eine Kommunikationsverbindung (6), durch die die mehreren Leuchten (2) miteinander verbunden sind,
**dadurch gekennzeichnet, dass**
- an wenigstens zwei der mehreren Leuchten (2) jeweils wenigstens zwei frequenzmodulierte Dauerstrichradarsensoren (3) vorgesehen sind, wobei die jeweiligen wenigstens zwei frequenzmodulierten Dauerstrichradarsensoren (3) um den Umfang der jeweiligen Leuchte (2) oder eines Mastes (5), an dem die jeweilige Leuchte (2) befestigt ist, verteilt vorgesehen sind,
- wobei die jeweilige Steuereinrichtung für das wenigstens eine Leuchtmittel (4) der jeweiligen Leuchte (2) ein oder mehrere Anschlüsse für die jeweiligen einzelnen frequenzmodulierten Dauerstrichradarsensoren (3) aufweist,
**und dass**
- die Kommunikationsverbindung (6) ausgelegt ist, die Information, die in einem der wenigstens zwei frequenzmodulierten Dauerstrichradarsensoren (3) einer der wenigstens zwei Leuchten (2) gewonnen wurde, auch weiteren der mehreren Leuchten (2) der Verkehrsflächenbeleuchtungsvorrichtung (1') zur Verfügung zu stellen.

2. Verkehrsflächenbeleuchtungsvorrichtung nach Anspruch 1, **dadurch gekennzeichnet, dass** die wenigstens zwei frequenzmodulierten Dauerstrichradarsensoren (3) jeweils Sensoren sind, deren Ausgangsfrequenz eine Dreieck- oder Sägezahnfunktion der Zeit ist.

3. Verkehrsflächenbeleuchtungsvorrichtung nach Anspruch 1, **dadurch gekennzeichnet, dass** die wenigstens zwei frequenzmodulierten Dauerstrichradarsensoren (3) jeweils Sensoren sind, deren Ausgangsfrequenz eine Rechteckfunktion der Zeit ist.

4. Verkehrsflächenbeleuchtungsvorrichtung nach Anspruch 1, **dadurch gekennzeichnet, dass** die wenigstens zwei frequenzmodulierten Dauerstrichradarsensoren (3) jeweils Sensoren sind, die Kombinationen verschiedener Modulationsarten einsetzen.

5. Verkehrsflächenbeleuchtungsvorrichtung nach wenigstens einem der vorhergehenden Ansprüche, **dadurch gekennzeichnet, dass** die Verkehrsflächenbeleuchtungsvorrichtung (1') zusätzlich zu den wenigstens zwei frequenzmodulierten Dauerstrichradarsensoren (3) wenigstens einen unmodulierten Dauerstrichradarsensor aufweist.

6. Verkehrsflächenbeleuchtungsvorrichtung nach wenigstens einem der vorhergehenden Ansprüche, **dadurch gekennzeichnet, dass** die wenigstens zwei frequenzmodulierten Dauerstrichradarsensoren (3) jeweils ein Radar-Front-End mit einem rotationssymmetrischen Öffnungswinkel zwischen 45° und 90° aufweisen.

7. Verkehrsflächenbeleuchtungsvorrichtung nach wenigstens einem der Ansprüche 1 bis 5, **dadurch gekennzeichnet, dass** die wenigstens zwei frequenzmodulierten Dauerstrichradarsensoren (3) jeweils ein Radar-Front-End mit einem asymmetrischen Erfassungsfeld aufweisen, welches einen Kegel mit einem elliptischen Querschnitt ausbildet.

8. Verkehrsflächenbeleuchtungsvorrichtung nach Anspruch 7, **dadurch gekennzeichnet, dass** der Kegel einen ersten, die große Halbachse des elliptischen Querschnittes bestimmenden Öffnungswinkel zwischen 45° und 90° und einen zweiten, die kleine Halbachse des elliptischen Querschnittes bestimmenden Öffnungswinkel zwischen 20° und 45° aufweist.

9. Verkehrsflächenbeleuchtungsvorrichtung nach wenigstens einem der vorhergehenden Ansprüche, **dadurch gekennzeichnet, dass** die wenigstens zwei frequenzmodulierten Dauerstrichradarsensoren (3) jeweils zur Messung der Entfernung von Personen oder Objekten, deren Geschwindigkeit und/oder deren Bewegungsrichtung ausgebildet sind.

10. Verkehrsflächenbeleuchtungsvorrichtung nach Anspruch 9, **dadurch gekennzeichnet, dass** die wenigstens zwei frequenzmodulierten Dauerstrichradarsensoren (3) jeweils zur Ausgabe einer Verkehrsdichte und/oder eines Helligkeitssollwertes ausgebildet sind.

11. Verkehrsflächenbeleuchtungsvorrichtung nach wenigstens einem der vorhergehenden Ansprüche, **dadurch gekennzeichnet, dass** an den wenigstens zwei der mehreren Leuchten (2) jeweils wenigstens eine Schnittstelle für die Messergebnisse der jeweiligen wenigstens zwei frequenzmodulierten Dauerstrichradarsensoren (3) vorgesehen ist.

12. Verkehrsflächenbeleuchtungssystem aufweisend eine Verkehrsflächenbeleuchtungsvorrichtung (1') nach wenigstens einem der vorhergehenden Ansprüche und eine Fernbedienungseinrichtung (8), die ausgebildet ist, die Verkehrsflächenbeleuchtungsvorrichtung (1') einzurichten und/oder zu steuern.

## Claims

1. Traffic area illuminating device (1') comprising:
- several lights (2) arranged in a group, wherein each of the several lights (2) comprises at least one illuminant (4), wherein a control device for the at least one illuminant (4) is integrated in each of the several lights (2), or a control device for the at least one illuminant (4) is integrated in the at least one illuminant (4) of each of the several lights (2), and
- a communication connection (6) by means of which the several lights (2) are connected with each other,
**characterized in that**
- at least two frequency modulated continuous wave radar sensors (3) each are provided on at least two of the several lights (2), wherein the respective at least two frequency modulated continuous wave radar sensors (3) are provided distributed around the circumference of the respective light (2) or a mast (5) on which the respective light (2) is fixed,
- wherein the respective control device for the at least one illuminant (4) of the respective light (2) comprises one or several ports for the respective individual frequency modulated continuous wave radar sensors (3),
**and that**
- the communication connection (6) is designed to also provide the information, which was gained in one of the at least two frequency modulated continuous wave radar sensors (3) of at least one of the at least two lights (2), to others of the several lights (2) of the traffic area illuminating device (1').

2. Traffic area illuminating device according to claim 1, **characterized in that** the at least two frequency modulated continuous wave radar sensors (3) each are sensors, whose output frequency is a triangle or sawtooth function of time.

3. Traffic area illuminating device according to claim 1, **characterized in that** the at least two frequency modulated continuous wave radar sensors (3) each are sensors, whose output frequency is a rectangular function of time.

4. Traffic area illuminating device according to claim 1, **characterized in that** the at least two frequency modulated continuous wave radar sensors (3) each are sensors, which use combinations of different modulation types.

5. Traffic area illuminating device according to at least one of the preceding claims, **characterized in that** the traffic area illuminating device (1') comprises at least one unmodulated continuous wave radar sensor in addition to the at least two frequency modulated continuous wave radar sensors (3).

6. Traffic area illuminating device according to at least one of the preceding claims, **characterized in that** the at least two frequency modulated continuous wave radar sensors (3) each comprise a radar front end with a rotationally symmetric opening angle between 45° and 90°.

7. Traffic area illuminating device according to at least one of the claims 1 to 5, **characterized in that** the at least two frequency modulated continuous wave radar sensors (3) each comprise a radar front end with an asymmetrical detection field, which forms a cone with an elliptic cross section.

8. Traffic area illuminating device according to claim 7, **characterized in that** the cone comprises a first opening angle between 45° and 90° determining the large half-axis of the elliptic cross section and a second opening angle between 20° and 45° determining the small half-axis of the elliptic cross section.

9. Traffic area illuminating device according to at least one of the preceding claims, **characterized in that** the at least two frequency modulated continuous wave radar sensors (3) each are formed to measure the distance of people or objects, their speed and/or their movement direction.

10. Traffic area illuminating device according to claim 9, **characterized in that** the at least two frequency modulated continuous wave radar sensors (3) each are formed to issue a traffic density and/or a brightness set value.

11. Traffic area illuminating device according to at least one of the preceding claims, **characterized in that** at least one interface each for the measurement results of the respective at least two frequency modulated continuous wave radar sensors (3) is provided on the at least two of the several lights (2).

12. Traffic area illuminating device comprising a traffic area illuminating device (1') according to one of the preceding claims and a remote control device (8), which is formed to set up and/or control the traffic area illuminating device (1').

## Revendications

1. Dispositif d'éclairage de surface de voies de circulation (1') comprenant :
- plusieurs luminaires (2) disposés en groupe, chacun des plusieurs luminaires (2) comprenant au moins une source de lumière (4), et un dispositif de contrôle pour la au moins une source de lumière (2) est intégré dans chacun des plusieurs luminaires (2) ou un dispositif de contrôle pour la au moins une source de lumière (4) est intégré dans chacun des plusieurs luminaires (2), et
- une connexion de communication (6) par laquelle les plusieurs luminaires (2) sont connectés entre eux,
**caractérisé en ce que**
- au moins deux capteurs radar à onde continue modulée en fréquence (3) sont prévus aux au moins deux des plusieurs luminaires (2) respectivement, les au moins deux capteurs radar à onde continue modulée en fréquence (3) étant prévus repartis autour de la circonférence du luminaire (2) ou d'un support (5), ou le luminaire (2) est attaché, respectivement,
- le dispositif de contrôle pour la au moins une source de lumière (4) du luminaire (2) respectif comprenant un ou plusieurs connecteurs pour les individuels capteurs radar à onde continue modulée en fréquence (3) respectivement,
**et que**
- la connexion de communication (6) est prévue pour mettre à disposition l'information qui a été collectée dans un des au moins deux capteurs radar à onde continue modulée en fréquence (3) d'un des au moins deux luminaires (2), aussi aux autres des plusieurs luminaires (2) du dispositif d'éclairage de surface des voies de circulation (1').

2. Dispositif d'éclairage de surface de voies de circulation selon la revendication 1, **caractérisé en ce que** les au moins deux capteurs radar à onde continue modulée en fréquence (3) sont des capteurs dont la fréquence de sortie est une fonction triangulaire ou en dents de scie du temps.

3. Dispositif d'éclairage de surface de voies de circulation selon la revendication 1, **caractérisé en ce que** les au moins deux capteurs radar à onde continue modulée en fréquence (3) sont des capteurs dont la fréquence de sortie est une fonction rectangulaire du temps.

4. Dispositif d'éclairage de surface de voies de circulation selon la revendication 1, **caractérisé en ce que** les au moins deux capteurs radar à onde continue modulée en fréquence (3) sont des capteurs qui utilisent des combinaisons de différents types de modulation.

5. Dispositif d'éclairage de surface de voies de circulation selon au moins l'une des revendications précédentes, **caractérisé en ce que** le dispositif d'éclairage de surface de voies de circulation (1') présente au moins un capteur radar à ondes continues non modulées en surplus des au moins deux capteurs radar à onde continue modulée en fréquence (3).

6. Dispositif d'éclairage de surface de voies de circulation selon au moins l'une des revendications précédentes, **caractérisé en ce que** des au moins deux capteurs radar à onde continue modulée en fréquence (3) chacun présente un front de radar avec un angle d'ouverture à symétrie de révolution compris entre 45° et 90°.

7. Dispositif d'éclairage de surface de voies de circulation selon au moins l'une des revendications 1 à 5, **caractérisé en ce que** des au moins deux capteurs radar à onde continue modulée en fréquence (3) chacun présente un front de radar avec un champ de détection asymétrique, qui forme un cône avec une section transversale elliptique.

8. Dispositif d'éclairage de surface de voies de circulation selon la revendication 7, **caractérisé en ce que** le cône présente un premier angle d'ouverture compris entre 45° et 90° définissant le demi-axe grand de la section transversale elliptique et un second angle d'ouverture compris entre 20° et 45° définissant le demi-axe petit de la section transversale elliptique.

9. Dispositif d'éclairage de surface de voies de circulation selon au moins l'une des revendications précédentes, **caractérisé en ce que** les au moins deux capteurs radar à onde continue modulée en fréquence (3) sont conçus pour mesurer la distance de personnes ou d'objets, leur vitesse et/ou leur direction de déplacement.

10. Dispositif d'éclairage de surface de voies de circulation selon la revendication 9, **caractérisé en ce que** les au moins deux capteurs radar à onde continue modulée en fréquence (3) sont conçus pour émettre une densité de trafic et/ou une valeur prescrite de luminosité.

11. Dispositif d'éclairage de surface de voies de circulation selon au moins l'une des revendications précédentes, **caractérisé en ce qu'**au moins une interface pour les résultats de mesure des au moins deux capteurs radar à onde continue modulée en fréquence (3) est prévue sur au moins deux des plusieurs luminaires (2).

12. Système d'éclairage de surface de voies de circulation comprenant un dispositif d'éclairage de surface de voies de circulation (1') selon au moins l'une des revendications précédentes et un dispositif de commande à distance (8) qui est formé pour configurer et/ou contrôler le dispositif d'éclairage de surface de voies de circulation (1').
